(19)

Europäisches
Patentamt

European
Patent Office

Office européen
des brevets

(11) **EP 4 502 967 A1**

(12) **EUROPEAN PATENT APPLICATION**

(43) Date of publication:
**05.02.2025  Bulletin 2025/06**

(21) Application number: **23189516.0**

(22) Date of filing: **03.08.2023**

(51) International Patent Classification (IPC):
**G06V 20/59** *(2022.01)*      **G06V 40/20** *(2022.01)*

(52) Cooperative Patent Classification (CPC):
**G06V 20/597; G06V 40/20; G06V 40/23; G06V 40/28**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Fraunhofer-Gesellschaft zur Förderung
der angewandten Forschung e.V.
80686 München (DE)**

(72) Inventor: **Abderrahmane, Khiat
53125 Bonn (DE)**

(74) Representative: **Patentanwälte Bressel und
Partner mbB
Potsdamer Platz 10
10785 Berlin (DE)**

(54) **COMPUTER-IMPLEMENTED METHOD FOR DETECTING RECKLESS DRIVING BEHAVIOR OF A DRIVER, DEVICE, MOBILE DEVICE AND VEHICLE**

(57)    The invention relates to a computer-implemented method for detecting reckless driving behavior of a driver (10), the method comprising the steps of: receiving captured image data (8) of the driver (10), extracting skeleton junction points (9-x) of the driver (10) from the captured image data (8), analyzing the extracted skeleton junction points (9-x) with respect to their spacial and/or temporal properties, generating and providing a warning signal (20) and/or a trigger signal (21) if the analysis result corresponds to a reckless driving behavior. Further, the invention relates to a device (1), a mobile device and vehicle.

Fig.3

EP 4 502 967 A1

**Description**

The invention relates to a computer-implemented method for detecting reckless driving behavior of a driver, a device, a mobile device and a vehicle.

According to the World Health Organization (WHO) about 1.3 million people die each year as a result of road accidents. Reckless driving behavior is one of the major causes to this number of accidents. In the United States, for example, the National Highway Traffic Safety Administration (NHTSA) reported that reckless driving behavior was a contributing factor to 8,476 fatalities in 2019. This accounted for approximately 27 % of all traffic fatalities that year. Hence, to prevent reckless driving behavior a way to detect and indicate reckless driving behavior is necessary.

The invention is based on the technical problem of developing a method and a device for providing a way to detect and indicate reckless driving behavior.

According to the invention, the technical problem is solved by a computer-implemented method having the features of claim 1, a computer program having the features of claim 11, a device having the features of claim 12, a mobile device having the features of claim 13, and a vehicle having the features of claim 15. Advantageous embodiments of the invention emerge from the dependent claims.

In a first aspect of the invention, in particular a computer-implemented method is proposed for detecting reckless driving behavior of a driver, the method comprising the steps of:

- receiving captured image data of the driver,
- extracting skeleton junction points (in particular at least 10, more preferably at least 20 points) of the driver (in particular in real time) from the captured image data,
- analyzing the extracted skeleton junction points (in particular as real time tracking) with respect to their spacial and/or temporal properties,
- generating and providing a warning signal and/or a trigger signal if the analysis result corresponds to a reckless driving behavior.

In a second aspect of the invention, in particular a computer program is proposed having instructions which when executed by a computing device or system cause the computing device or system to perform the method according to any one embodiment disclosed herein. The computer program may be part of a computer program product and may be stored on a non-transitory computer-readable storage medium.

Further, in a third aspect of the invention, in particular a device is proposed comprising means for carrying out the method according to any one embodiment disclosed herein. The means may comprise at least one processing device and at least one memory. The means may further comprise a communication bus and interfaces for receiving and/or transmitting data and/or signals.

In a fourth aspect of the invention, in particular a mobile device is proposed, comprising at least one device according to the third aspect. The mobile device may be a smartphone, a tablet computer, a laptop, a smartwatch, a navigation device, a dash cam or the like.

In a fifth aspect of the invention, in particular a vehicle is proposed, comprising at least one device according to the third aspect and/or at least one mobile device according to the fourth aspect. The vehicle may be a passenger car, a bus or a truck.

The computer-implemented method, the computer program, the device, the mobile device, and the vehicle allow detecting and indicating reckless driving behavior of a driver. One of the main ideas of the invention is to extract skeleton junction points from image data that are captured from the driver and that represent the driver. This extraction can be done by using, for example, the Kinect-SDK Version 2.0 provided by Microsoft Inc., or a similar framework. In particular, the extraction of the junction points provides a set of three-dimensional position data (e.g. three-dimensional coordinates) for each of the identified skeleton junction points for each image taken from the driver at least in a relative coordinate system, more preferable in a coordinate system of the vehicle or the cabin of the vehicle. The extraction of the skeleton junction points may also be referred to as skeleton tracking. In particular, a time series of images (image data) is captured from the driver by one or more cameras placed in an appropriate way to capture full skeleton junction points (e.g., on top of the passenger side). Capturing the image data of the driver by one or more cameras may be part of a method incorporating the computer-implemented method. In particular, this time series is captured continuously and provided as a stream of sequential image frames. The capturing may be started when the vehicle engine is started and stopped when the vehicle engine is shut off. For each frame of the time series three-dimensional positions of the identified skeleton junction points are provided, such that a trajectory of each of the identified junction points may be tracked and analyzed over time.

Another main idea of the invention is that the extracted skeleton junction points are analyzed with respect to their spacial and/or temporal properties. In particular, these spacial and/or temporal properties are derived from the three-dimensional positions/coordinates of the junction points provided by the extraction. To derive the spacial and/or temporal properties, in particular, at least one given metric is used. In particular, a given set of metrics is used. A warning signal, in particular indicating reckless driving behavior, and/or a trigger signal are generated and provided, if the analysis result corresponds to a reckless driving behavior. In particular, the reckless driving behavior may be identified or detected due to a correspondence with given (pre-defined) spacial and/or temporal properties of the skeleton junction points and/or groups of the skeleton junction points. In particular, the spacial and/or temporal properties may be defined by at least one metric.

In particular, reckless driving behavior is defined by any action that may cause harm for the driver himself and other drivers as well as surrounding objects, while those behaviors are not detectable by existing traffic law. More precisely, the invention is completely different from a driving alerting system, in which those systems check the road signs and driving rules; while the driver can still drive recklessly even under 60 km/h, e.g. by turning the steering wheel very fast. In particular, the method disclosed measures whether a driver is driving recklessly based on body movements, which are reflected by the spacial and/or temporal proprieties of the skeleton junction points, in particular with respect to given ranges and/or thresholds, and particularly taking into account a set of logic rules and/or using a machine learning classifier. The method and the device described in this disclosure are more accurate and do not depend only on surrounding objects and/or information, such as the speed of the car, road etc.

The skeleton junction points may belong to a full skeleton or to a part of the skeleton. It is preferable that at least an upper part of the body is represented by the skeleton junction points. In particular, skeleton junction points may correspond to the following anatomical features: foot, ankle, knee, hip, shoulder, neck, head, eye, elbow, wrist, hand. For symmetrical anatomical features a junction point for each side (left/right) may be extracted, provided, and/or analyzed.

In particular, the analyzing may comprise driving behavior classification into normal or non-normal behavior (e.g. reckless behavior or dangerous behavior), based on the spacial and/or temporal properties with respect to their thresholds and/or ranges and/or combinations thereof. The behavior may be classified by using logic rules and/or a machine learning classifier.

In particular, the warning signal may be displayed to the driver on a display or transmitted to a third party, e.g. a vehicle owner (e.g. rental car firm) and/or the authorities. The warning signal may also be transmitted to more than one recipient. The trigger signal may be transmitted to a control system, which thus may be triggered to take a pre-defined action. The pre-defined action may comprise limiting the available traction power of the vehicle, slowing the vehicle down, and/or automatically stopping the vehicle.

In one embodiment, the analyzing comprises comparing a position and/or a velocity and/or an acceleration and/or a change of acceleration (jerk) of at least one junction point and/or of at least one segment defined by selected junction points with at least one given range and/or at least one given threshold. In particular, the listed quantities define or are defined by a metric each. In particular, this threshold is defined based on data analysis. This allows to analyze the position and/or the movement of individual junction points or segments defined by selected junction points. A segment may be defined by two junction points, in particular, by two adjacent junction points. For example, a segment may be defined by the junction points corresponding to the knee and the hip. Further examples for segments may be defined by the following pairs of junction points: ankle-knee, hip-shoulder, shoulder-neck, shoulder-elbow, elbow-wrist, neck-eye. The velocity and/or the acceleration and/or the change of acceleration are derived by differentiating the position of the respective junction point or segment. The quantities listed above may also be referred to as metrics.

In one embodiment, the analyzing comprises determining at least one relationship between at least selected junction points and/or at least selected segments defined by selected junction points and comparing the determined at least one relationship with at least one given range and/or at least one given threshold. This allows analyzing a relative motion between junctions points and/or segments. In particular, the at least one relationship defines or is defined by a metric.

In one embodiment, the at least one relationship comprises one or more of the following: a distance, a joint angle, an angular velocity of a joint angle, an angular acceleration of a joint angle, a symmetry between junction points and/or segments defined by selected junction points, a curvature defined by selected junction points and/or selected segments. This allows to define higher order features of the skeleton and facilitates analyzing the driving behavior. In particular, the listed quantities define or are defined by a metric each.

In one embodiment, the analyzing comprises determining a relative motion between at least selected junction points and/or at least selected segments defined by selected junction points and comparing it with at least one given range and/or at least one given threshold. This allows to analyze relative motion between at least selected junctions points or at least selected segments. In particular, the relative motion defines or is defined by a metric.

In one embodiment, the analyzing is performed in consideration of multiple criteria. This allows to define and/or use particular sets of criteria to detect reckless driving behavior. A set may be selected dependent on a driver identity and/or driver properties (e.g. height, weight, age, sex etc.) and/or a situation and/or a context in which the vehicle is. The criteria correspond, in particular, to a set of metrics derived from the extracted skeleton junction points.

In one embodiment, the analyzing comprises classifying a driving behavior into at least two classes, of which one is reckless driving, based on a machine learning classifier and/or logic rules that take into account the extracted skeleton junction points with respect to their spacial and/or temporal properties. In particular, the at least two classes comprise the classes: normal driving and reckless driving. Further, more classes may be used, e.g. an additional class for dangerous driving. In particular, at least one metric is used as input for the classification. The machine learning classifier is a trained machine learning classifier. It was trained by using labeled training data consisting of pairs of skeleton junction points and/or metrics (see examples below) derived therefrom which are paired with the respective classes (e.g. either with normal driving or reckless driving) as ground truth (label). The training is, in particular a supervised training. The training data may be collected and derived from field tests and/or driving simulation tests and/or simulations.

In one embodiment, the analyzing is performed in consideration of a situation and/or a context in which the vehicle is. This allows tuning the criteria and/or parameters used for the analysis. In particular, the range(s) and/or threshold(s) may be set or selected in consideration of the situation and/or the context in which the vehicle is. In addition, the range(s) and/or thresholds(s) may be set or selected in consideration of a driver identity and/or driver properties (e.g. height, weight, age, sex etc.). For example, a machine learning classifier and/or a database may provide and/or contain values for the range(s) and/or the threshold(s) in correspondence to a number of situations and/or contexts and/or driver identities and/or driver properties. When a certain situation, a certain context, a certain driver identity and/or certain driver properties are detected or otherwise obtained, the range(s) and/or threshold(s) may be queried, for example, from the database and used for the analysis. In particular, a situation and/or a context may also be determined or provided by map data and/or positional data (provided by, for example, the Global Positioning System and/or another suitable positioning system).

In one embodiment, the analyzing is performed in a stepwise process with at least two steps, wherein a previous step has to be performed successfully as a requirement to perform a following step. This allows reducing computing power and memory use necessary to execute the method. For example, in a first step various angles may be compared to respective ranges. If at least one value is not within its respective range, a second step is not performed. If all values for the angles are within the respective ranges, other spacial and/or temporal properties of the junction points (e.g. a distance between junction points, an acceleration of one or more junction points etc.) are compared to respective thresholds in a second step. The steps may also comprise classifying the driving behavior into normal or reckless behavior, in particular, based on a set of logic rules and/or with the help of a trained machine leaning classifier. For instance, such a logic rule may be the following: if (1) spacial and/or temporal properties of the junction points for the left hand is within the range and (2) spacial and/or temporal properties of the junction points of the right hand is NOT WITHIN the range THEN the driving behavior is classified, e.g., as unsafe.

In one embodiment, at least two levels of reckless driving behavior are distinguished, wherein an individual warning signal and/or trigger signal is generated and provided for each of these levels. This way, different levels of warning or escalation may be provided. In the previous example, within the first step, if at least one value is not within its respective range a first warning may be displayed to the driver indicating that reckless driving was detected. On the second step, if a threshold is exceeded (or underrun, respectively), for example, an alert message (in the form of a warning signal and/or trigger signal) may be sent to the vehicle to trigger some sort of action and/or to the authorities.

In particular, one or more of the metrics listed below may be used for analyzing the skeleton junction points:

(Joint) angles:

A joint angle is defined by two adjacent body segments, the segments, in particular, being defined by selected junction points. The angles are typically measured in degrees or radians.

Example:

$$\text{Elbow (flexion) angle} = \arccos((B^2+C^2-A^2)/2*B*C)),$$

where A, B, and C are the lengths of the segments forming the elbow angle (body parts/junction points: shoulder, elbow, and wrist).

Angular velocities:

The angular velocity is defined by the rate of change of the joint angle over time, typically measured in degrees or radians per second.

Example:

$$\text{Shoulder pitch rate} =$$

$$(\text{shoulder pitch angle}(t2) - \text{shoulder pitch angle}(t1) / (t2 - t1))$$

Acceleration:

The acceleration is defined as the rate of change of velocity over time with respect to junction points and/or segments, typically measured in meters per second squared.

Example:

$$\text{Acceleration of the hand} =$$
$$(\text{hand velocity}(t2) - \text{hand velocity}(t1)) / (t2 - t1)$$

Energy expenditure:

This metric is based on (1) computed joint angles for relevant body parts based on the skeleton data (e.g., knee angle, elbow angle, shoulder angle, etc.), and (2) determined range of motion for each joint by analyzing the maximum and minimum values of joint angles during the driving session and (3) mapping between different driving maneuvers and their corresponding MET values, which represent the energy expenditure in multiples of the resting metabolic rate.

One can compute the energy expenditure as follows

-

$$\text{Energy Expenditure (in METs)} = \text{Basal MET} \times (1 + \text{MET Increment per Joint}) \times$$
$$\text{Total MET Multiplier}$$

Where:
Basal MET: The resting metabolic rate, representing the energy expended at rest (approximately 1 MET).

MET Increment per Joint: A factor that accounts for the additional energy expenditure due to joint angles and movements. This would be specific to each joint and might require calibration from physiological studies.

Total MET Multiplier: An overall multiplier that considers other factors influencing energy expenditure during driving, such as speed, acceleration, and the duration of driving. This multiplier may need to be determined through empirical analysis or calibration.

Symmetry:

The symmetry is defined as the balance between left and right sides of the body, typically measured using ratios or percentages. In particular, corresponding segments of the body are considered when determining the symmetry.

Example:

$$\text{Asymmetry of arm movement} =$$
$$|(\text{left arm movement} - \text{right arm movement})| / (\text{left arm movement} + \text{right}$$
$$\text{arm movement})$$

The arm movement is defined, in particular, as the angular displacement of the steering wheel made by each arm Where arm movement is determined by Shoulder Joint Points (SH) and Elbow Joint Points (E). It may also include tracking the position of the hands on the steering wheel and the angle of the steering wheel.

Curvature:

The curvature is defined by the amount of bending or deviation from a straight line in the skeleton, typically measured in radians or degrees per unit length.

Example:

Curvature of the spine =

(angle between two adjacent vertebrae) / (distance between the two vertebrae)

Where vertebrae is determined by Shoulder Joint Points, Hip Joint Points, Spine Joint Points. Then the angle between adjacent vertebrae is determined using the coordinates of the shoulder joint points (SH), hip joint points (H), and spine joint points (SP) over time. The distance between the two vertebrae is also computed based on the coordinates of the corresponding joint points.

Jerk:

The jerk is defined by the rate at which an acceleration changes, typically measured in meters per second cubed or radians per second cubed.
Example:

Example:   Jerk of the foot = (foot acceleration(t2) − foot acceleration(t1)) / (t2 − t1)

Distance:

The distance is defined as the distance between body parts or between a body part and a reference position or object, typically measured in meters or centimeters.
Example:

Distance between the hand and the steering wheel =

$$((SWx - X)^2 + (SWy - Y)^2 + (SWz - Z))^{0,5}$$

where SWx, SWy, SWz are the positions/coordinates of a point on the steering wheel that is closest to the hand, and X, Y, Z the positions/coordinates of the hand (alternatively all positions representing the steering wheel may be used and/or checked for the calculation, and the smallest resulting value is then chosen as distance).

Relative motion:

The relative motion is defined as a motion between body parts, typically measured using vectors.
Example:

Relative motion of the torso and legs =

(velocity of torso - velocity of legs) / (velocity of torso + velocity of legs)

Where Torso is composed of

- Shoulder Joint Points (SH): These points represent the positions of the driver's shoulders, which are essential for determining the upper torso's position.
- Hip Joint Points (H): These points represent the positions of the driver's hips, which are crucial for determining the lower torso's position.
- Spine Joint Points (SP): These points represent the positions of the driver's spine, which can help establish the connection between the upper torso and lower torso.
- Head Joint Point (HEAD): In some cases, the position of the driver's head may also be included as part of the torso joint points, as the head's movement can influence the upper torso's motion.

The Torso position is then defined as center of gravity of these points.
Where leg is composed of

- Hip Joint Points (H): These points represent the positions of the driver's hips, which are essential for determining the positions of the upper legs and lower legs.
- Knee Joint Points (K): These points represent the positions of the driver's knees, which help establish the positions of the upper legs and lower legs.
- Ankle Joint Points (A): These points represent the positions of the driver's ankles, which are crucial for determining the positions of the lower legs.

The leg position is then defined as center of gravity of these points.

G-force:

The G-force is the gravitational force exerted on the body, typically measured by accelerometers.
Example:

$$\text{Lateral G-force} =$$

$$\text{(acceleration in the lateral dimension) / gravity constant}$$

The division by the gravity constant is used for normalization purposes.

Yaw rate:

The yaw rate is defined by the rate of rotation around the vertical axis of the body, typically measured in degrees or radians per second.
Example:

$$\text{Yaw rate} = (\text{yaw angle } (t2) - \text{yaw angle}(t1)) / (t2 - t1)$$

Pitch rate:

The pitch rate is defined by the rate of rotation around the lateral axis of the body, typically measured in degrees or radians.
Example:

$$\text{Pitch rate} = (\text{pitch angle } (t2) - \text{pitch angle}(t1)) / (t2 - t1)$$

Roll rate:

The roll rate is defined by the rate of rotation around the longitudinal axis of the body, typically measured in degrees or radians.
Example:

$$\text{Roll rate} = (\text{roll angle } (t2) - \text{role angle}(t1)) / (t2 - t1)$$

Torso twist angle:

The torso twist is defined as the degree of rotation between the upper (shoulder) and the lower torso (hips). To calculate the torso twist angle, the positions of the shoulders, hips, and spine over time need to be tracked by skeleton tracking. With the three-dimensional positions (coordinates) the torso twist may be calculated.
Example:

$$\text{Torso twist angle} =$$

$$\arctan((SHx - HXx) / (SHz - HXz)) - \arctan((SPx - HXx) / (SPz - HXz))$$

Where:

- SHx, SHz: These represent the x and z positions (coordinates) of the left shoulder during driving. The left shoulder is a joint point that represents the position of the driver's left shoulder in three-dimensional space.
- SPx, SPz: These represent the x and z positions (coordinates) of the left hip during driving. The left hip is a joint point that represents the position of the driver's left hip in three-dimensional space.
- HXx, HXz: These represent the x and z positions (coordinates) of the hips during driving. The hips are joint points that represent the position of the driver's hips in three-dimensional space.

Elbow (flexion) angle:

The elbow (flexion) angle is defined by the angle between the upper arm and the forearm. To calculate the elbow (flexion) angle, it is necessary to track the positions of the shoulder, the elbow, and the wrist over time using skeleton tracking. With the positions/coordinates of the junction points the elbow (flexion) angle may be calculated.

Example:

$$\text{Elbow (flexion) angle} =$$
$$\arccos((SHx - ELx) * (Wx - ELx) + (Shy - Ely) * (Wy - ELy) + (SHz - ELz)$$
$$* (Wz - ELz)) / (d1 * d2)$$

where SHx, SHy, SHz are the x, y, and z positions/coordinates of the left shoulder; ELx, ELy, ELz are the x, y, and z positions/coordinates of the left elbow; Wx, Wy, and Wz are the x, y, and z positions/coordinates of the left wrist; and d1 and d2 are the distances between the shoulder and the elbow and between the elbow and the wrist, respectively.

Knee (flexion) angle:

The knee (flexion) angle is defined as the angle between the thigh and the lower leg. To calculate the knee (flexion) angle the position of the hip, knee, and ankle over time need to be tracked using skeleton tracking. Once the positions/coordinates of the junction points for these joints are available, the knee (flexion) angle may be calculated.

Example:

$$\text{Knee flexion angle} =$$
$$\arccos((HXx - KNx) * (FXx - KNx) + (HXy - KNy) * (FXy - KNy) + (HXz - KNz) * (FXz - KNz)) / (d1 * d2)$$

where HXx, HXy, HXz are the x, y, and z positions/coordinates of the left hip; KNx, KNy, KNz are the x, y, and z positions/coordinates of the left knee; FXx, FXy, FXz are the x, y, and z positions/coordinates of the left ankle; and d1 and d2 are the distances between the hip and the knee and between the knee and the ankle, respectively.

The metrics listed above are examples. Other metrics or combinations of metrics, in particular in terms or logic rules, may also be used.

The ranges and/or thresholds for the quantities and metrics above may be determined and/or defined in field tests and/or simulated driving tests and/or simulation.

Further, a device and/or a vehicle of the fifth aspect is proposed, wherein at least one camera of the at least one device or the at least one mobile device is located on a passenger side of the vehicle and is arranged to capture the driver in a side and/or frontside view. This allows to capture from a well suited perspective for extracting the skeleton junction points.

The invention is explained in greater detail below on the basis of preferred exemplary embodiments with reference to the drawings. In the drawings:

Fig. 1    shows a schematic of an embodiment of the device used for performing the method;

Fig. 2    a schematic diagram illustrating an embodiment of the method for detecting reckless driving behavior of a driver;

Fig. 3    a schematic depiction of a driver in a vehicle cabin with detected skeleton junction points for the upper body of the driver;

Fig. 4a, 4b    show example representations of the skeleton junction points and segments connecting the junction points to illustrate the invention;

Fig. 5        shows a schematic illustration of examples for joint angles;

Fig. 6        shows a schematic to illustrate an example for a metric;

Fig. 7        shows a schematic to illustrate another example for a metric;

Fig. 8        shows a schematic diagram to illustrate an embodiment of the method.

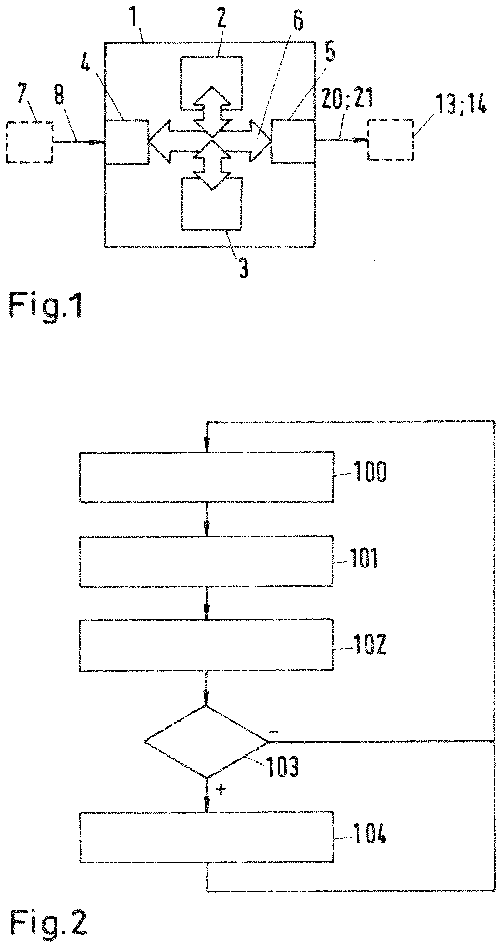

Fig. 1 shows a schematic view of an embodiment of the device 1 used for performing the method described in this disclosure. The device 1 comprises a processor 2, a memory 3, interfaces 4, 5, and a communication bus 6 connecting the processor 2, the memory 3 and the interfaces 4, 5. The device 1 may comprise at least one camera 7, which captures and provides image data 8. The device 1 may be a mobile device, such as a smartphone, a tablet computer, a laptop, a dash cam or a navigation device.

Fig. 2 shows a schematic diagram illustrating an embodiment of the method for detecting reckless driving behavior of a driver. The method may be performed on the device 1 in the embodiment shown in fig. 1.

In step 100 the device 1 receives captured image data 8 which was captured of the driver with the at least one camera 7. The image data 8, in particular, comprises a time series with multiple frames depicting the driver at consecutive points of time. The image data 8 may comprise a continuous stream of images representing the driver.

In step 101 skeleton junction points of the driver are extracted from the captured image data 8. To extract the skeleton junction points the device 1 may use the Kinect v 2.0 software framework by Microsoft Inc. The result of the extraction is a set of three-dimensional position data/coordinates for the junction points corresponding to a position of the respective junction point at each point in time of the image data 8.

In step 102 the extracted skeleton junction points, in particular the positions of the skeleton junction points, are analyzed with respect to their spacial and/or temporal properties. For this, the device may use one or more of the metrics described in this disclosure and compare it with respective range(s) and/or threshold(s).

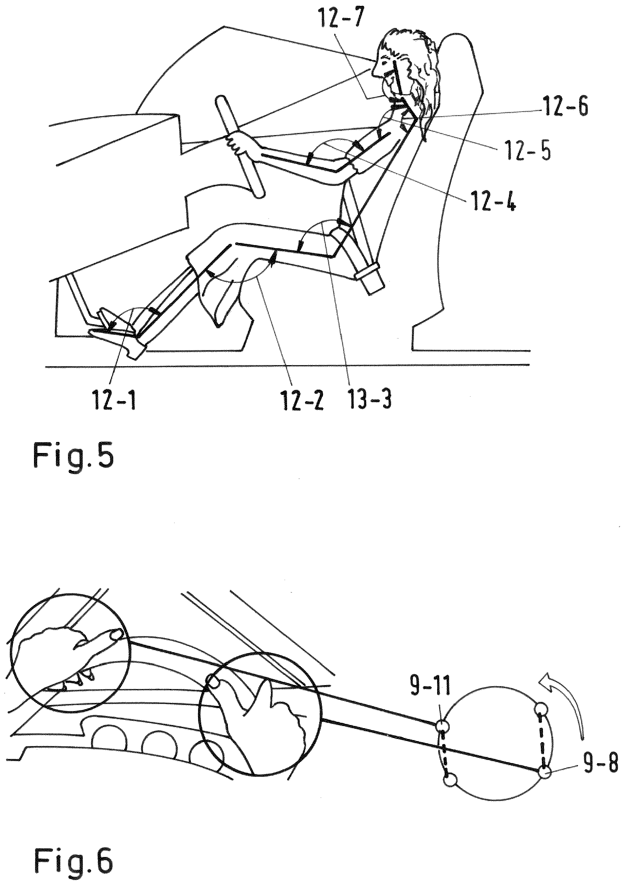

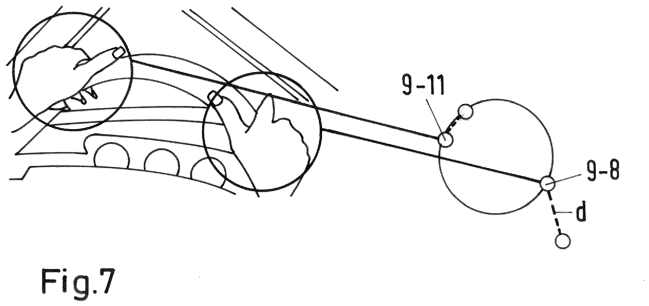

In step 103 it is checked whether the analysis result of step 102 corresponds to a reckless driving behavior. In particular, the result of the comparison with the respective range(s) and/or respective threshold(s) and/or logic rules and/or a machine learning classifier may indicate such a reckless driving behavior. Those ranges and thresholds may be defined based on a machine learning classifier and/or a database that correspond(s) to a number of situations and/or contexts and/or driver identities and/or driver properties. If reckless driving is not the case, the previous steps may be repeated again. If reckless driving is the case, a warning signal 20 (fig. 1) and/or a trigger signal 21 (fig. 1) is generated and provided in step 104. Afterwards, the previous steps may be repeated again. The warning signal 20 may be displayed to the driver on a display 13 or transmitted to a third party, e.g. a vehicle owner (e.g. rental car firm) and/or the authorities. The warning signal 20 may also be transmitted to more than one recipient. The trigger signal 21 may be transmitted to a control system 14, which thus may be triggered to take a pre-defined action. The pre-defined action may comprise limiting the available traction power of the vehicle, slowing the vehicle down, and/or automatically stopping the vehicle. Possible reckless and/or dangerous driving behavior to consider are the following (but not limited to) Swerving, Reckless Lane Changing, Rapid and Sharp Turns, Vibration (due to a lot of breaks), Distracted Driving (fig. 7). For instance, for swerving the situation is mapped to spacial and temporal properties with their ranges and thresholds such as the change of junction points 9-8, 9-11 positions of the hands and its circular trajectory, outer circle of the steering wheel, acceleration, velocity (fig.6).

In particular, a database with specific position or movement patterns (resembled, for example, by specific ranges and/or thresholds for the metrics used), e.g., waving hands, foot strides of specific velocity and/or specific angle, and/or a trained machine learning model may be used to classify (identify) a reckless (or dangerous) driving behavior.

The analyzing may comprise classifying a driving behavior into at least two classes, of which one is reckless driving, based on a machine learning classifier and/or logic rules that take into account the extracted skeleton junction points with respect to their spacial and/or temporal properties. Further classes may be used, e.g. dangerous driving.

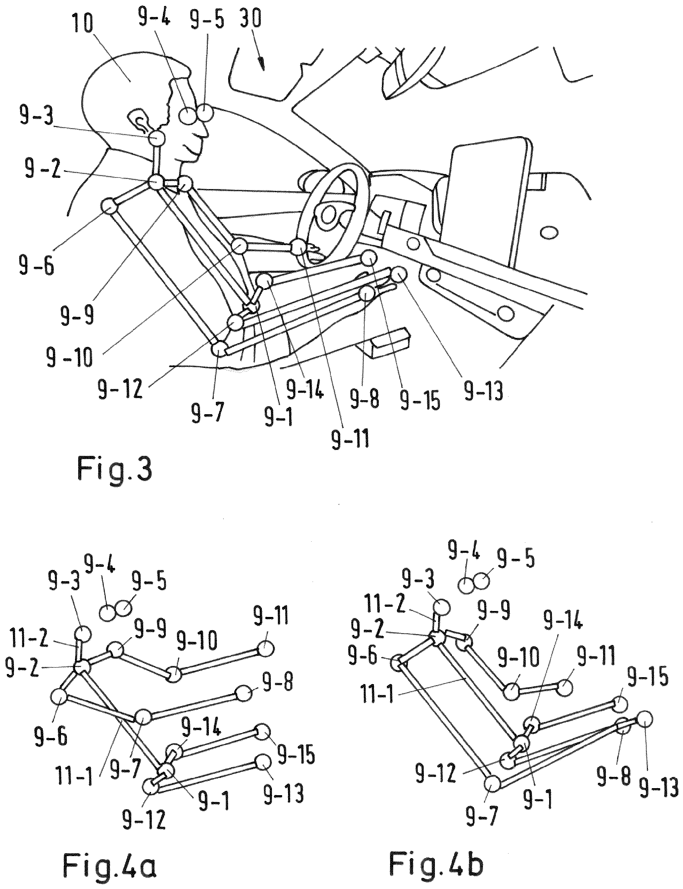

Fig. 3 shows a schematic image of a driver 10 in a vehicle cabin 30 with detected skeleton junction points 9-x for the upper body of the driver 10. The skeleton junction points 9-x each correspond with a three-dimensional position in a relative coordinate system or an absolute coordinate system, for example, an absolute coordinate system relating to the vehicle cabin 30. When the driver 10 moves the body, the junction points 9-x follow the movement. This way, the posture of the body of the driver 10 may be analyzed by using the positions/coordinates of the junction points 9-x. From the posture and/or the spacial and/or temporal properties of the junction points 9-x a behavior of the driver 10 may be derived. In particular, the junction points 9-x are representative for a posture of the body and/or a behavior of the driver expressed through the body position and/or its movement.

Figures 4a and 4b show example representations of the skeleton junction points 9-x and segments 11-x connecting the junction points 9-x to illustrate the invention (for clarity reasons only a few segments 11-x are indicated).

Fig. 4a shows a constellation of the junction points 9-x, in which the hands of the driver, corresponding with the junction points 9-8 and 9-11, are on a steering wheel of the vehicle, while fig. 4b shows a constellation of the junction points 9-x, in which the hands of the driver are resting on the knees (similar posture as shown in fig. 3).

The analyzing may comprise comparing a position and/or a velocity and/or an acceleration and/or a change of acceleration of at least one junction point 9-x and/or of at least one segment 11-x defined by selected junction points 9-x with at least one given range and/or at least one given threshold. The velocity may be calculated from a change of the positions/coordinates over time. The acceleration may be calculated from a change of the calculated velocities. The change of the acceleration may be calculated from a change of the calculated accelerations over time.

The values defining the range(s) and/or threshold(s) may be derived from experimental test drives and/or test drives in a vehicle simulator, where a behavior of the driver is manually classified at least into two levels or classes: normal driving and reckless driving. The range(s) and/or threshold(s) define the border between these at least two levels or classes.

The analyzing may comprise determining at least one relationship between at least selected junction points 9-x and/or at least selected segments 11-x defined by selected junction points 9-x and comparing the determined at least one relationship with at least one given range and/or at least one given threshold.

The at least one relationship may comprise one or more of the following: a distance, a joint angle 12-x (fig. 5), an angular velocity of the joint angle 12-x, an angular acceleration of the joint angle 12-x, a symmetry between junction points 9-x and/or segments 11-x defined by selected junction points 9-x, a curvature defined by selected junction points 9-x and/or selected segments 11-x.

Examples for the joint angles 12-x are schematically shown in fig. 5:

> 12-1: Foot-calf angle
> 12-2: Knee angle
> 12-3: Trunk-thigh angle
> 12-4: Elbow angle
> 12-5: Shoulder angle
> 12-6: Trunk-Neck angle
> 12-7: Neck-Head angle (e.g. the head being defined by the eye position)

The analyzing may comprise determining a relative motion between at least selected junction points 9-x and/or at least selected segments 11-x defined by selected junction points 9-x and comparing it with at least one given range and/or at least one given threshold.

The analyzing may be performed in consideration of multiple criteria. For example the acceleration of the two junction points 9-8, 9-11, which are corresponding to the driver's hands, may be compared with a given threshold. If the values of acceleration for both junction points 9-8, 9-11 are exceeding the given threshold, it may be concluded, for example, that the steering wheel is turned with a fast and/or abrupt movement, which generally coincides with reckless driving.

Fig. 6 shows a schematic to illustrate this example. The left side of fig. 6 shows an illustration of the hands sitting on the steering wheel in a typical position. The hands correspond with the junction points 9-8, 9-11 (cf. fig. 4a). When the wheel is turned, both positions of the hands and with it the junction points 9-8, 9-11 change on a circular trajectory because the movement follows the outer circle of the steering wheel. The acceleration can be derived from the change of velocity, which itself can be derived from the change of the positions.

Further examples for multiple criteria may comprise combinations of various angles, angular velocities of the angles, accelerations of the angles, a symmetry of junction points or groups of junction points, a curvature, a change of acceleration of junction points and/or angles, a relative motion between junction points and/or segments defined by selected junction points, a torso twist, a stride length and/or a stride frequency, which each may be compared with respective given ranges and/or thresholds (see also list of metrics provided in the general description of this disclosure). In particular, logic rules and/or a trained machine learning model may be used to classify (identify) a reckless (or dangerous) driving behavior, taking into account the combinations of the various quantities for identifying specific position or movement patterns, e.g., waving hands, foot strides of specific velocity and/or specific angle etc..

Fig. 7 shows a schematic to illustrate an example metric which uses a distance of a hand to the steering wheel. The left side of fig. 7 shows an illustration of the hands sitting on the steering wheel in a typical position. The hands correspond with the junction points 9-8, 9-11 (cf. fig. 4a). From the positions of the junction points 9-8, 9-11 to the circle of the steering wheel a distance d of each hand to the steering wheel may be calculated and afterwards compared to a given threshold value (e.g. 25 cm). If the distance d exceeds the threshold value the warning signal 20 (fig. 1) and/or the trigger signal 21 (fig. 1) is generated and provided.

The analyzing may be performed in consideration of a situation and/or a context in which the vehicle is. In particular, the values for the respective range(s) and/or threshold(s) may be selected in consideration of a situation and/or a context in which the vehicle is. For example, when making a turn, the body will be accelerated in the opposite direction due to its inertia. Hence, when a turn is detected as a situation and/or context, the range(s) and/or threshold(s) for the metrics considered to detect the reckless driving behavior may be different from those in a normal situation and/or context, when the vehicle is driving straight on. The values for the respective range(s) and/or threshold(s) may be stored in and queried from a database depending on the situation and/or context.

The analyzing may be performed in a stepwise process with at least two steps, wherein a previous step has to be performed successfully as a requirement to perform a following step.

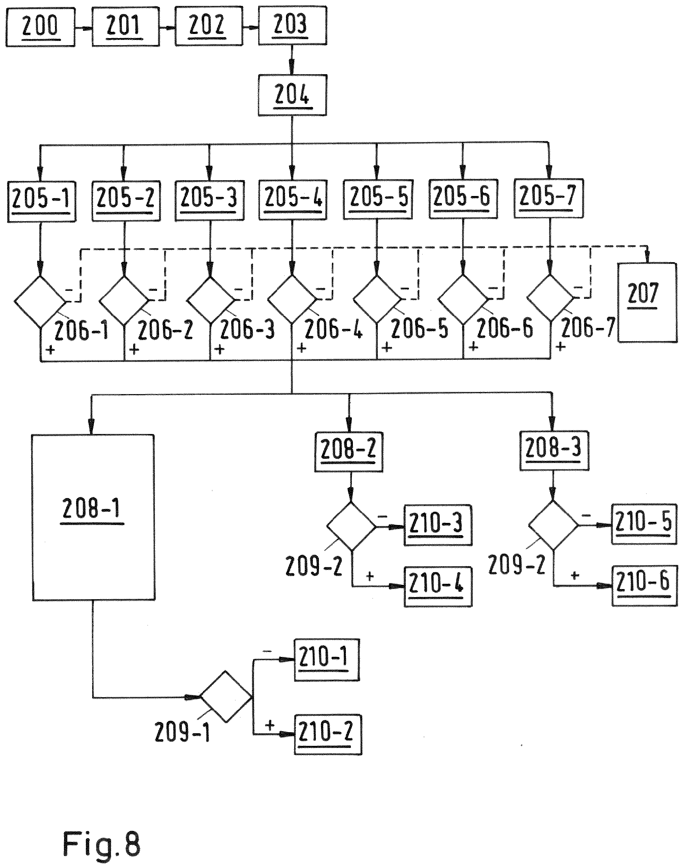

Fig. 8 shows a schematic diagram to illustrate an implementation of such an embodiment. In the example shown, the first step of two steps comprises the steps 205-x, 206-x, 207, while the second step of the two steps comprises the steps 208-x, 209-x, 210-x. The schematic diagram also illustrates other aspects of the method described in this disclosure.

In step 200 image data of the driver is captured by one or more cameras. The image data is, in particular, a time series of images (frames) which are repeatedly and continuously captured when the vehicle is operated.

In optional step 201 the image data is converted to RGB color coding.

In optional step 202 the captured image data is further processed, e.g. filtered, such that the following extraction steps may be facilitated.

In step 203 the skeleton junction points are extracted from the image data, for example by using the Kinect v 2.0 framework by Microsoft Inc. However, other frameworks may also be used. As a result, in particular, the positions/coordinates of the skeleton junction points are provided for each captured frame of the image data. In particular, junction points are extracted only for those junction points of the skeleton, which are visible or represented in the image data (e.g. only upper body).

In optional step 204 landmarks are drawn for the skeleton junction points augmenting the image data. This allows to display the image data together with the landmarks. In addition, segments defined by adjacent junction points and which connect the adjacent junction points may also be generated and drawn.

In steps 205-x angles are calculated from the extracted junction points and/or the segments defined by the junction points and used as metrics that are analyzed. Optionally, the calculated angles may also be displayed. In particular, the following angles may be calculated: foot-calf angle (205-1), knee angle (205-2), trunk-thigh angle (205-3), elbow angle (205-4), shoulder angle (205-5), trunk-back angle (205-6), neck-head angle (205-7).

In steps 206-x the calculated angles are analyzed by comparing them with respective ranges for each of the angles. If the comparison shows that the respective angle is out of its respective given range, a warning may be generated and displayed in step 207. If the comparison shows that the respective angle is within its respective given range, steps 208-x are performed.

In step 208-1 various metrics may be calculated and may also be displayed. The metrics may include, among others, joint angles, angular velocities of the joint angles, acceleration of the joint angles, a symmetry of junction points or groups of junction points, a curvature of junction points or groups of junction points, a change of acceleration, a distance between junction points or body parts represented by the junction points, a relative motion between junction points and/or segments defined by selected junction points, a G-force, a yaw rate, a pitch rate, a roll rate, a torso twist, an elbow (flexion) angle, a knee (flexion) angle, energy expenditure..

In step 209-1 the various metrics are compared with respective given thresholds. If the respective threshold is not exceeded, a signal may be generated and displayed in step 210-1 that nothing is to declare. If the respective threshold is exceeded, a warning signal is generated and may be displayed and/or send to pre-defined recipients in step 210-2, for example, the driver and/or the authorities and/or the vehicle holder (e.g. rental car firm etc.). Alternatively or additionally, a trigger signal may be generated and provided, which may be used to trigger at least one (pre-defined) action of the vehicle.

In step 208-2, as a particular example, distances of the junction points corresponding with the hands of the driver from the steering wheel are calculated and may also be displayed. In step 209-2 the calculated distance(s) are compared with a given threshold, for example, a value of 25 cm may be used as threshold value. If the respective threshold is not exceeded, a signal may be generated and displayed in step 210-3 that nothing is to declare. If the respective threshold is exceeded, a warning signal is generated and may be displayed and/or send to pre-defined recipients in step 210-4, for example, the driver and/or the authorities and/or the vehicle holder (e.g. rental car firm etc.). Alternatively or additionally, a trigger signal may be generated and provided, which may be used to trigger at least one (pre-defined) action of the vehicle.

In step 208-3, as another particular example, accelerations of the junction points corresponding with the hands of the driver are calculated and may also be displayed (cf. also the example illustrated in fig. 6). In step 209-3 the calculated accelerations are compared with a given threshold, for example, a value of 30 m/s$^2$ may be used as threshold value. If the respective threshold is not exceeded, a warning signal may be generated and displayed in step 210-5 that nothing is to declare. If the respective threshold is exceeded, an alert signal is generated and may be displayed and/or send to pre-defined recipients in step 210-6, for example, the driver and/or the authorities and/or the vehicle holder (e.g. rental car firm etc.). Alternatively or additionally, a trigger signal may be generated and provided, which may be used to trigger at least one (pre-defined) action of the vehicle.

Afterwards, the method may be repeated again. In particular, the method is repeated continuously.

At least two levels of reckless driving behavior may be distinguished, wherein an individual warning signal and/or trigger signal is generated and provided for each of these levels. The at least two levels may be distinguished by using more than one range and/or more than one threshold, while each range and/or threshold corresponds to one level of reckless driving behavior.

The warning and/or trigger signals may be displayed on a display 13 (fig. 1). The display 13 may be part of the device 1, in particular the display 13 of a mobile device. In addition, the content displayed on the display 13 may comprise the captured image data 8 and/or an augmentation representing the skeleton junction points 9-x and/or the segments 11-x and/or the values calculated by using the metrics.

The method and the device described in this disclosure particularly aim at promoting safer and more responsible driving by using data and feedback to encourage positive behavior change by reducing reckless (or dangerous) driving and avoiding the risk of accidents.

List of reference numerals

| | |
|---|---|
| 1 | device |
| 2 | processor |
| 3 | memory |
| 4 | interface |
| 5 | interface |
| 6 | communication bus |
| 7 | camera |
| 8 | image data |
| 9-x | junction points |
| 10 | driver |
| 11-x | segment |
| 12-x | joint angles |
| 13 | display |
| 14 | control system |
| 20 | warning signal |
| 21 | trigger signal |
| 30 | vehicle cabin |
| 100-104 | method steps |
| 200-210 | method steps |
| d | distance |

**Claims**

1. Computer-implemented method for detecting reckless driving behavior of a driver (10), the method comprising the steps of:

   - receiving captured image data (8) of the driver (10),
   - extracting skeleton junction points (9-x) of the driver (10) from the captured image data (8),
   - analyzing the extracted skeleton junction points (9-x) with respect to their spacial and/or temporal properties,
   - generating and providing a warning signal (20) and/or a trigger signal (21) if the analysis result corresponds to a reckless driving behavior.

2. Method according to claim 1, **characterized in that** the analyzing comprises comparing a position and/or a velocity and/or an acceleration and/or a change of acceleration of at least one junction point (9-x) and/or of at least one segment (11-x) defined by selected junction points (9-x) with at least one given range and/or at least one given threshold.

3. Method according to claim 1 or 2, **characterized in that** the analyzing comprises determining at least one relationship between at least selected junction points (9-x) and/or at least selected segments (11-x) defined by selected junction points (9-x) and comparing the determined at least one relationship with at least one given range and/or at least one given threshold.

4. Method according to claim 3, **characterized in that** the at least one relationship comprises one or more of the following: a distance, a joint angle, an angular velocity of a joint angle, an angular acceleration of a joint angle, a symmetry between junction points (9-x) and/or segments (11-x) defined by selected junction points (9-x), a curvature defined by selected junction points (9-x) and/or selected segments (11-x).

5. Method according to any one of the preceding claims, **characterized in that** the analyzing comprises determining a relative motion between at least selected junction points (9-x) and/or at least selected segments (11-x) defined by selected junction points (9-x) and comparing it with at least one given range and/or at least one given threshold.

6. Method according to any one of the preceding claims, **characterized in that** the analyzing is performed in consideration of multiple criteria.

7. Method according to any one of the preceding claims, **characterized in that** the analyzing comprises classifying a driving behavior into at least two classes, of which one is reckless driving, based on a machine learning classifier and/or logic rules that take into account the extracted skeleton junction points (9-x) with respect to their spacial and/or temporal properties.

8. Method according to any one of the preceding claims, **characterized in that** the analyzing is performed in consideration of a situation and/or a context in which the vehicle is.

9. Method according to any one of the preceding claims, **characterized in that** the analyzing is performed in a stepwise process with at least two steps, wherein a previous step has to be performed successfully as a requirement to perform a following step.

10. Method according to any one of the preceding claims, **characterized in that** at least two levels of reckless driving behavior are distinguished, wherein an individual warning signal (20) and or trigger signal (21) is generated and provided for each of these levels.

11. Computer program having instructions which when executed by a computing device or system cause the computing device or system to perform the method according to any one of claims 1 to 10.

12. A device (1) comprising means for carrying out the method according to any one of claims 1 to 10.

13. A device (1) according to claim 12, further comprising at least one camera, the at least one camera (7) being configured to capture and provide image data (8) of the driver (10).

14. Mobile device, comprising at least one device (1) according to claim 12 or 13.

15. Vehicle, comprising at least one device (1) according to claim 12 or 13 and/or at least one mobile device according to claim 14.

Fig.1

Fig.2

Fig.3

Fig.4a

Fig.4b

12-7

12-6

12-5

12-4

12-1    12-2  13-3

Fig.5

9-11

9-8

Fig.6

Fig.7

Fig.8

Europäisches Patentamt
European Patent Office
Office européen des brevets

# EUROPEAN SEARCH REPORT

**Application Number**

EP 23 18 9516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/004745 A1 (FULOP SZABOLCS [RO] ET AL) 5 January 2023 (2023-01-05) * abstract * * figures 3,4 * * paragraphs [0002] – [0004], [0010], [0018], [0029] – [0049], [0059] – [0064] * ----- | 1-15 | INV. G06V20/59 G06V40/20 |
| X | CN 108 446 678 A (UNIV TONGJI) 24 August 2018 (2018-08-24) * paragraphs [0002], [0054], [0057], [0077], [0079] * ----- | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 16 November 2023 | Philips, Petra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 9516

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2023

| Patent document cited in search report | Publication date | Patent family member(s) | Publication date |
|---|---|---|---|
| US 2023004745 A1 | 05-01-2023 | EP 4214688 A1 | 26-07-2023 |
| | | EP 4276768 A2 | 15-11-2023 |
| | | US 2023004745 A1 | 05-01-2023 |
| | | WO 2023274832 A1 | 05-01-2023 |
| CN 108446678 A | 24-08-2018 | NONE | |

EPO FORM P0459

For more details about this annex : see Official Journal of the European Patent Office, No. 12/82